# EUROPEAN PATENT SPECIFICATION

(11) **EP 4 098 933 B1**
(45) Date of publication and mention of the grant of the patent: **21.10.2026**
(21) Application number: 21746919.6
(22) Date of filing: 21.01.2021
(51) Int. Cl.: F21S 2/00, F21V 5/00, F21V 5/04, G02B 3/00, G02B 17/08, G02B 27/09, F21V 21/30, F21V 7/00, F21Y 115/10, G02B 5/02

(54) **ILLUMINATION DEVICE**
BELEUCHTUNGSVORRICHTUNG
DISPOSITIF D'ÉCLAIRAGE

(30) Priority: 29.01.2020 JP 2020012501
(43) Date of publication of application: 07.12.2022
(73) Proprietor: STANLEY ELECTRIC CO., LTD., Tokyo 153-8636 (JP)
(72) Inventor: MIZUKAMI Toshinari, Tokyo 153-8636 (JP); MIZUKI Yosuke, Tokyo 153-8636 (JP)
(74) Representative: Klang, Alexander H.
(86) International application number: PCT/JP2021/001950
(87) International publication number: WO 2021/153394

(56) References cited:
- WO-A1-2017/002725
- DE-A1- 102011 006 643
- JP-A- 2014 022 077
- JP-A- 2014 022 077
- JP-A- 2016 009 065
- US-A1- 2008 198 604
- US-A1- 2012 230 057
- US-B1- 10 330 902

## Description

### TECHNICAL FIELD

The present invention relates to an illuminator apparatus such as a spotlight.

### BACKGROUND TECHNOLOGY

Generally, an illuminator apparatus such as a spotlight projects light emitted from an optical source at a narrow angle of light distribution. The projected light is required to have a uniform luminance, a uniform color and distinct brightness and darkness of edges (contours).

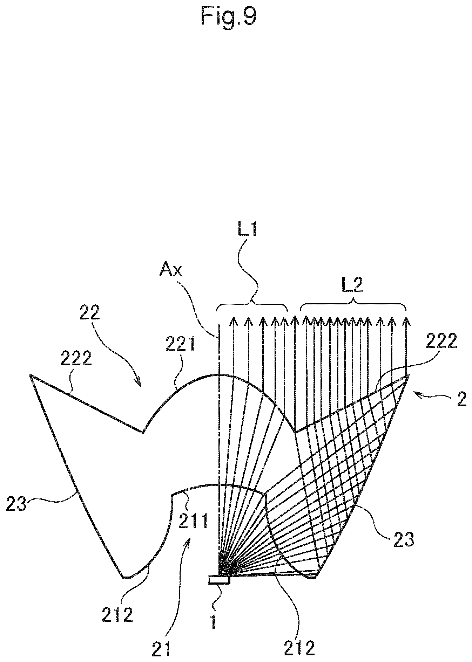

Fig. 9 is a cross-sectional view illustrating a first prior art illuminator apparatus.

In Fig. 9, the first prior art illuminator apparatus is constructed by an optical source 1 and a collimator lens 2 (see: JP 2014-022077 A). The collimator lens 2 is constructed by an incident surface 21 formed by an inner concave surface 211 and an outer convex surface 212, an emitting surface 22 formed by an inner convex surface 221 and an outer conical side surface 222, and a peripheral surface 23 coupling an end of the incident surface 21 to an end of the emitting surface 22. Light incident from the optical source 1 to the inner concave surface 211 of the incident surface 21 is emitted as central collimate light L1 from the inner convex surface 221 of the emitting surface 22. On the other hand, light incident from the optical source 1 to the outer convex surface 212 of the incident surface 21 is totally reflected by the peripheral surface 23, and is emitted as peripheral collimate light L2 from the outer conical side surface 222 of the emitting surface 22. The central collimate light L1 and the peripheral collimate light L2 as projected light are both in parallel with the optical axis Ax, thus realizing a narrow angle light distribution. Note that the central collimate light L1 and the peripheral collimate light L2 are symmetrical with respect to the optical axis Ax.

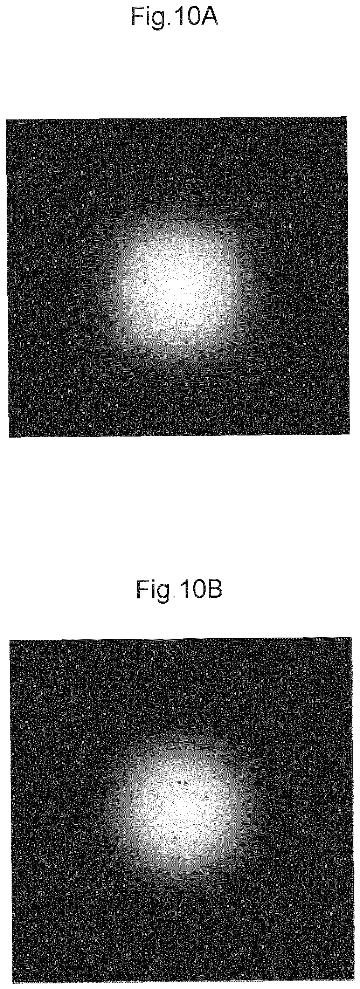

Fig. 10 illustrates projected light patterns on a virtual screen obtained by the illuminator apparatus of Fig. 9, where (A) shows a case where the optical source 1 has a square light emitting surface with respect to the optical axis Ax of the collimator lens 2, and (B) shows a case where the optical source 1 has a circular light emitting surface with respect to the optical axis Ax of the collimator lens 2.

As illustrated in Fig. 10, even when the light emitting surface of the optical source 1 is square or circular, the central collimate light L1 and the peripheral collimate light L2 are superposed onto each other, so that edges with distinct brightness/darkness can be obtained.

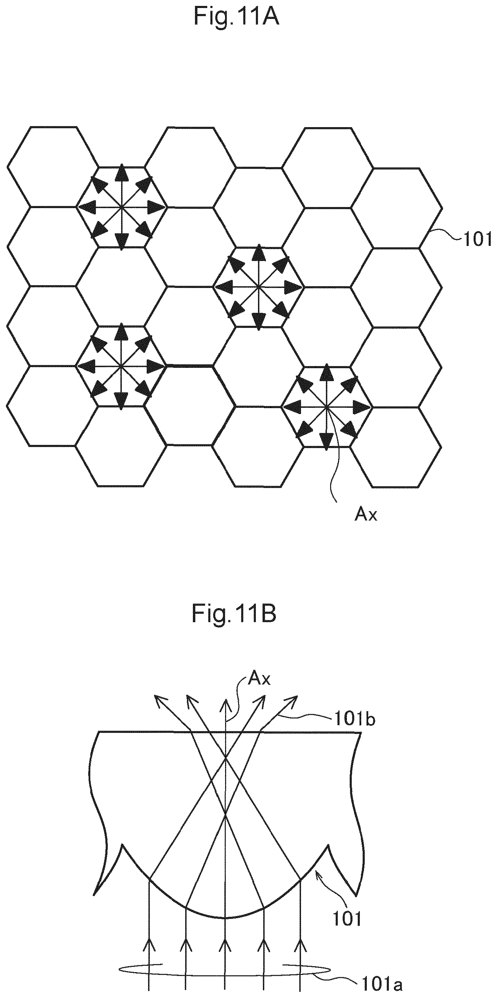

A second prior art illuminator apparatus diffuses collected light on a primary optical system by a projection lens of a secondary optical system as illustrated in (A) of Fig. 11, to form projected light (see: WO 2016-186180 A1). In this case, the projection lens is a lens array obtained by arranging a large number of hexagonal convex lenses 101 on an incident surface. Referring to (B) of Fig. 11 which shows one of the hexagonal convex lenses 101, parallel light 101a incident perpendicularly to the hexagonal convex lens 101 is diffused along all the directions around 360° with respect to the optical axis Ax and becomes 360°-diffused light 101b. Note that even when the hexagonal convex lenses 101 are arranged on an emitting surface, parallel light incident perpendicularly to the hexagonal convex lenses 101 is diffused along all the directions around 360° with respect to the optical axis Ax. Thus, the shapes of the optical sources are blurred to remove the luminance nonuniformity and mix separated colors to remove the color nonuniformity, thus obtaining a uniform projected light pattern.

US 10 330 902 B1 discloses an illumination optic which is a collimator lens having a solid monolithic structure that includes spaced-apart and longitudinally-extending side lobed segments laterally disposed around a central core section. Each lobed segment has a TIR inner peripheral surface extending from a rear side towards a front side of the collimator lens and has a light exit surface generally facing the front side. Also disclosed is an illumination device including the collimator lens and a diffusion lens that is coaxially positioned next to its front side to redirect light coming out of the light exit surfaces. The diffusion lens has spaced-apart outlying optical regions disposed around a central optical axis, at least one for each light exit surface, to be selectively positioned in or out of alignment with a corresponding one of the light exit surfaces depending on a relative angular position between the collimator lens and the diffusion lens.

JP 2014 022077 A discloses a spot light device which generates spot light with clear brightness and darkness at a boundary when a planar light-emitting surface is used as a light source. The spot light device comprises a light-emitting surface, and a lens, in which the lens has a recess on a side of an incidence surface opposed to the light-emitting surface, and has a center part inside a boundary line at distance of p×R (when R denotes a radius of the lens).

US 2008/198604 A1 discloses a lighting apparatus using a filter and a condenser for LED illumination in which an optical filter to obtain diverse optical patterns as a us desires is connected to a condenser for LED illumination without using any additional device. The lighting apparatus in which the optical filter can be exchanged comprises: a LED for generating a light source for illumination, a condenser for concentrating the light source generated from the LED, and an optical filter connected to the condenser, for providing an optical pattern, wherein the optical filter is connected to the condenser so as to be attachable to or detachable from the condenser.

### SUMMARY OF THE INVENTION

### PROBLEMS TO BE SOLVED BY THE INVENTION

In the first prior art illuminator apparatus as illustrated in Fig. 9, however, the shape of the optical source 1 is projected so as to generate luminance nonuniformity. Also, when light emitted from the optical source 1 such as a white light emitting diode (LED) element has color differences at each emitting point and every emitting angle, color nonuniformity reflecting the color differences of the optical source 1 would be generated. Further, color nonuniformity would be caused by the chromatic aberration of the collimator lens 2. Thus, there is a problem in that the luminance nonuniformity and the color nonuniformity would be generated.

Also, in the second prior art illuminator apparatus as illustrated in Fig. 11, even in the hexagonal convex lenses arranged in a region corresponding to an edge of the projected light pattern, since these hexagonal convex lenses diffuse the incident light parallel with the optical axis toward all the directions around 360°, the distinct brightness and darkness of the edge would disappear, which is a problem.

### MEANS FOR SOLVING THE PROBLEMS

In order to solve the above-mentioned problems, a illuminator apparatus according to the present invention is provided as set forth in claim 1. Preferred embodiments of the present invention may be gathered from the dependent claims.

### EFFECT OF THE INVENTION

According to the present invention, the luminance nonuniformity and the color nonuniformity can be removed, and also, the distinct brightness and darkness of edges can be maintained.

### BRIEF DESCRIPTION OF THE DRAWINGS

Fig. 1 shows views illustrating a first illuminator apparatus, where (A) is an entire cross-sectional view, (B) is a lens array view on the emitting surface side of the diffusion lens of (A), and (C) is a partial enlargement of the diffusion section of (B).
Fig. 2 shows views illustrating a modification of the diffusion lens of Fig. 1, where (A) is a lens array view on the emitting surface side and (B) is an enlarged cross-sectional view of the fan-shaped convex lens of (A).
Fig. 3 shows views illustrating a second illuminator apparatus, where (A) is an entire cross-sectional view, (B) is a lens array view on the emitting surface side of the diffusion lens of (A), and (C) is a light pattern projected by the illuminator apparatus of (A).
Fig. 4 shows views illustrating a comparative example with the illuminator apparatus of Fig. 3, where (A) is an entire cross-sectional view and (B) is a lens array view on the emitting surface side of the diffusion lens of (A).
Fig. 5 shows a graph illustrating the normalized luminous intensity characteristics of the illuminator apparatuses of Figs. 3 and 4.
Fig. 6 shows lens array views on the emitting surface side of a modification of the diffusion lens of Fig. 3.
Fig. 7 shows views explaining collimated light patterns of the collimator lenses of Figs. 1 and 3, where (A) and (D) are entire cross-sectional views of collimator lenses, (B) and (E) illustrate collimated light, and (C) and (F) illustrate projected light patterns projected by the collimator lenses.
Fig. 8 shows a front view illustrating a spotlight apparatus to which the illuminator apparatuses of Figs. 1 and 3 are applied.
Fig. 9 shows a cross-sectional view illustrating a first prior art illuminator apparatus.
Fig. 10 shows projected light patterns by the illuminator apparatus of Fig. 9, where (A) shows a case wherein the optical source light emitting surface is square, and (B) shows a case wherein the optical source light emitting surface is circular.
Fig. 11 shows views illustrating a second prior art illuminator apparatus, where (A) shows a lens array view on the emitting surface, and (B) is an enlarged cross-sectional view of the hexagonal convex lens of (A).

### DETAILED DESCRIPTION

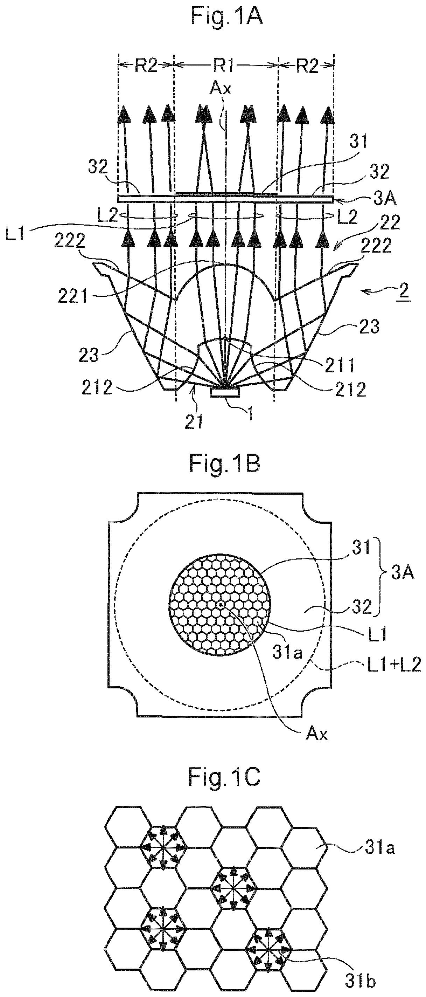

Fig. 1 is a view illustrating a first illuminator apparatus, where (A) is an entire cross-sectional view, (B) is a lens array view on the emitting surface side of the diffusion lens of (A), and (C) is a partial enlargement of the diffusion section of (B).

In (A) of Fig. 1, the illuminator apparatus has a diffusion lens 3A on the collimator lens 2, in addition to the optical source such as the light emitting diode (LED) element 1 and the collimator lens 2 provided on the optical source 1 of Fig. 9. Also, referring to (B) of Fig. 1, the diffusion lens 3A has a diffusion section 31 which is circular, for example, on a central section and a non-diffusion section 32 on the periphery of the diffusion section 31. The diffusion section 31 defining a diffusion region R1 has a lens array formed by multiple closest arranged hexagonal convex lenses 31a. Since central collimated light L1 incident parallelly to the optical axis Ax is refracted by the convex surfaces of the hexagonal convex lenses 31a to be transmitted, light passed through the hexagonal convex lenses 31a is diffused along all the directions around 360° to become 360° diffusion light 31b. The diffusion section 31 receives the central collimated light L1 with ununiform luminance and ununiform color to remove the nonuniformity of luminance and the nonuniformity of color. On the other hand, no lens is formed in the non-diffusion section 32 defining a non-diffusion region, so that light incident to the non-diffusion section 32 is transmitted therethrough without diffusing the light. As a result, the non-diffusion section 32 receives the peripheral collimated light (peripheral light) L2 with distinct brightness and darkness of edges and maintains the distinct brightness and darkness. Thus, while the distinct brightness and darkness of edges is maintained, the nonuniformity of luminance and the nonuniformity of color are removed.

In (A) and (B) of Fig. 1, the hexagonal convex lenses 31a are provided on the emitting surface side; however, the hexagonal convex lenses 31a can be provided on the incident surface side while the emitting surface side can be flattened. Also, the diffusion section 31 of the diffusion lens 3 corresponds to the central collimate light L1, and the non-diffusion section 32 of the diffusion lens 3A corresponds to the peripheral collimate light L2; however, the accurate correspondence is not unnecessary. Also, the hexagonal convex lenses 31a have an advantage in that effective use is made of limited space; however, circular convex lenses, rectangular convex lenses and other polygonal convex lenses having a similar diffusion effect can be used.

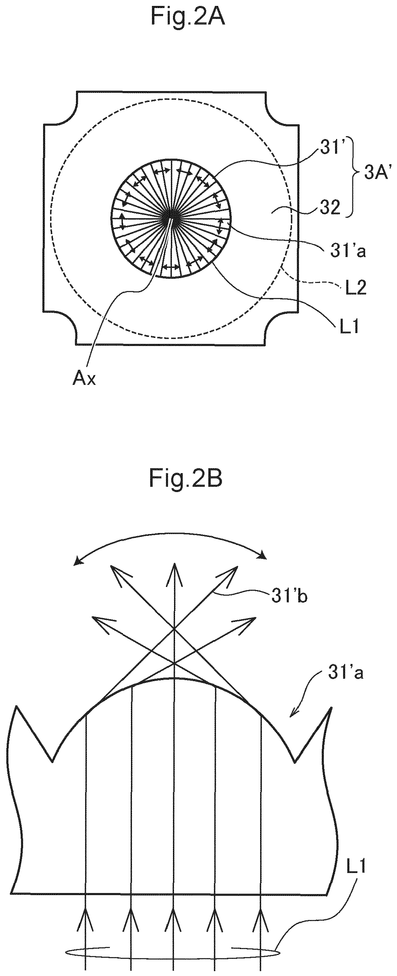

Fig. 2 is a view illustrating a modification of the diffusion lens of Fig. 1, where (A) is a lens array view on the emitting surface side and (B) is an enlarged cross-sectional view of the fan-shaped convex lens of (A) cut along its short-side direction (width-side direction) and circumferential direction.

In (A) of Fig. 2, a diffusion section 31' of a diffusion lens 3A' has a lens array formed by multiple radially closest-arranged fan-shaped convex lenses 31'a along its circumferential direction with the optical axis Ax as a center on the emitting surface. Referring to (B) of Fig. 2, since the central collimated light L1 incident parallelly to the optical axis Ax is refracted at the concave surface of the fan-shaped convex lenses 31'a, the central collimated light L1 becomes rotational direction diffusion light 31'b which is diffused only along the rotational direction with respect to the optical axis Ax as indicated by arrows. Therefore, even in this case, the nonuniformity of the luminance and the nonuniformity of the color can be removed. In addition, the light transmitted through the fan-shaped convex lenses 31'a is never diffused outside along the radial direction of the diffusion section 31. Note that, if the fan-shaped convex lenses 31'a are cut along their long-side direction and radial direction, the height of the fan-shaped convex lenses 31'a is gradually decreased to form a right-angled triangle. Also, in Fig. 2, the fan-shaped convex lenses 31'a can be provided on the incident surface of the diffusion lens 3A', and the emitting surface can be flattened.

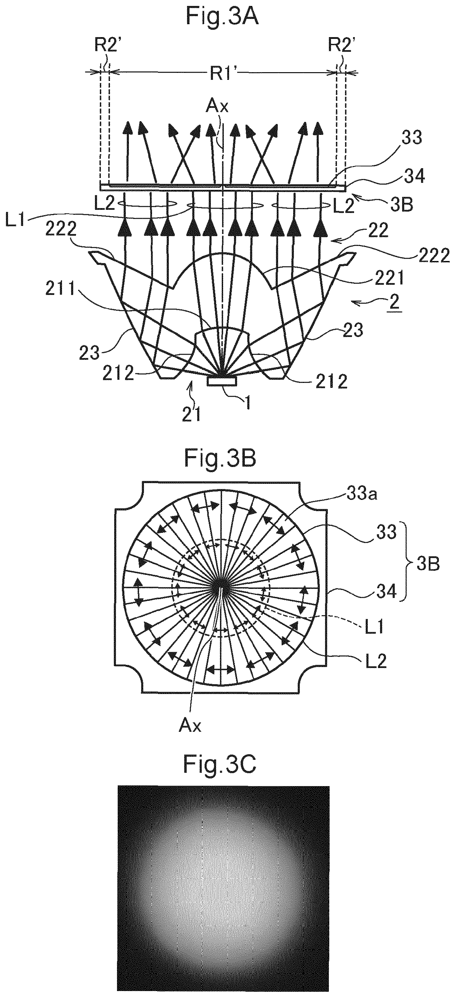

Fig. 3 is a view illustrating a second illuminator apparatus, where (A) is an entire cross-sectional view, (B) is a lens array view on the emitting surface side of the diffusion lens of (A), and (C) is a light pattern projected by the illuminator apparatus of (A).

In (A) of Fig. 3, a diffusion lens 3B is provided instead of the diffusion lens 3A of (A) of Fig. 1. Also, referring to (B) of Fig. 3, the diffusion lens 3B has a diffusion section 33 and a non-diffusion section 34 on the periphery of the diffusion section 33. The diffusion section 33 defining a diffusion region R1' has a lens array formed by multiple radially closest-arranged fan-shaped convex lenses 33a along its circumferential direction with the optical axis Ax as a center. In the same way as in (B) of Fig. 2, the central collimated light L1 and the peripheral collimated light L2 incident parallelly to the optical axis Ax are refracted by the convex surface of the fan-shaped convex lenses 33a and are diffused only along the rational direction with respect to the optical axis as indicated by arrows in (B) of Fig. 3. On the other hand, no lens is formed in the non-diffusion section 34 defining a non-diffusion region R2', so that light incident to the non-diffusion section 34 is transmitted therethrough without diffusing the light.

The diffusion section 33 receives both of the central collimated light L1 and the peripheral collimated light L2. The central collimated light L1 incident to the diffusion section 33 is diffused only along the rotational direction with respect to the optical axis Ax, so that the nonuniformity of luminance and the nonuniformity of color are removed. Similarly, the peripheral collimated light L2 incident to the diffusion section 33 is diffused only along the rotational direction with respect to the optical axis Ax, so that the edges are not expanded, the distinct brightness and darkness of the edges are maintained. Thus, as illustrated in (C) of Fig. 3, in the projected light pattern, while the distinct brightness and darkness of the edges are maintained, the nonuniformity of luminance and the nonuniformity of color are removed. Even in Fig. 3, the fan-shaped convex lenses 33a can be on the incident surface side of the diffusion lens 3B.

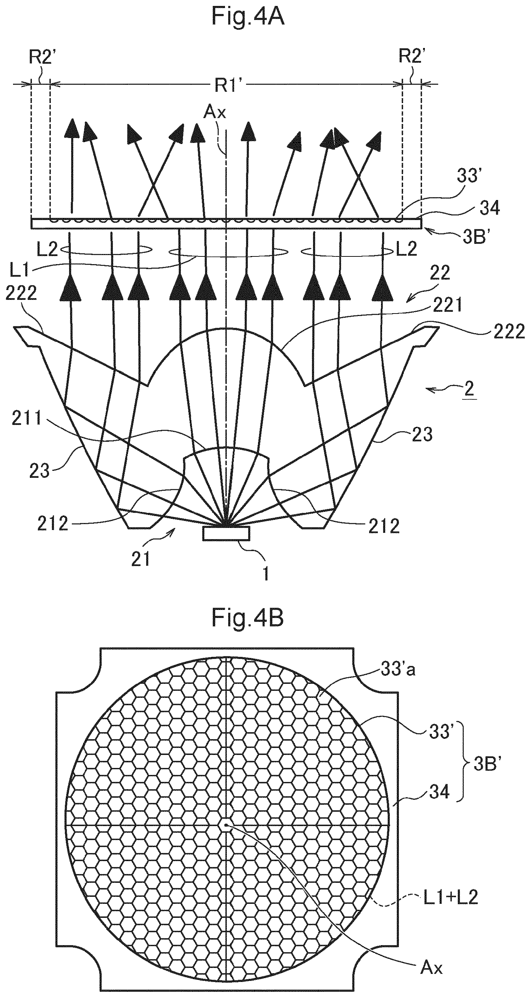

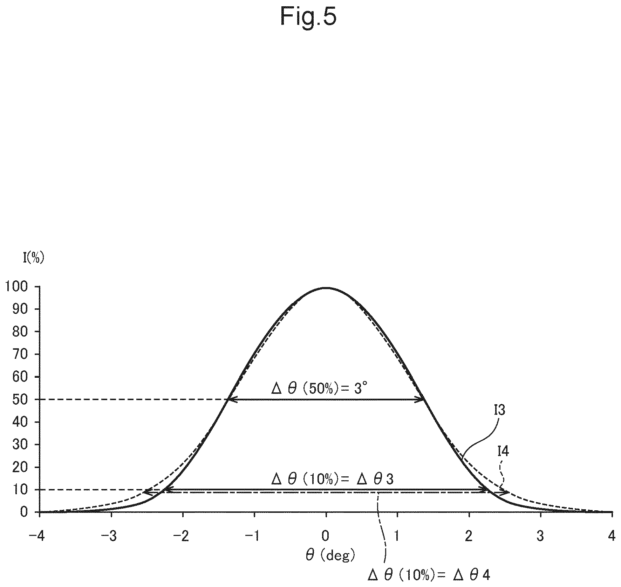

In Fig. 4, which illustrates a comparative example with the illuminator apparatus of Fig. 3, a diffusion lens 3B' is provided instead of the diffusion lens 3B of Fig. 3. The diffusion lens 3B' has a diffusion section 33' and a non-diffusion section 34. The diffusion section 33' defining a diffusion region is a lens array where a large number of hexagonal convex lenses 33'a are arranged. The diffusion section 33' receives both of the central collimated light L1 and the peripheral collimated light L2. In this case, the nonuniformity of luminance and the nonuniformity of color of the central collimated light L1 and the peripheral collimated light L2 are removed. However, the distinct brightness and darkness of the edges of the peripheral collimated light L2 are blurred by the diffusion at all the directions around 360° caused by the hexagonal convex lenses 33'a of the diffusion section 33 close to the edges. That is, as illustrated in Fig. 5, which shows the normalized luminous intensity characteristic with respect to the emitting angle θ, the fan-shaped convex lenses 33a of Fig. 3 and the hexagonal convex lenses 33'a are designed so that the half-beam angle is 3°, the half-width Δθ (50%) of the normalized luminous intensity I3 of the fan-shaped convex lenses 33a of Fig. 3 and the half-width Δθ (50%) of the normalized luminous intensity I4 of the hexagonal convex lenses 33'a of Fig. 4 are both 3°. However, regarding the beam angle Δθ (10%) at 10%, the half-width Δθ (10%) of the normalized luminous intensity I3 of the fan-shaped convex lenses 33a is smaller than the half-width Δθ (50%) of the normalized luminous intensity I4 of the hexagonal convex lenses 33'a, it can be understood that the brightness and darkness of edges is more distinct in the diffusion lens 3B using the fan-shaped convex lenses 33a than in the diffusion lens 3B' using the hexagonal convex lenses 33'a.

In the diffusion section 33 of Fig. 3, the farther the location of the fan-shaped convex lenses 33a from the optical axis Ax, the larger the width of the fan-shaped convex lenses 33a. Therefore, the farther the location of the fan-shaped convex lenses 33a, the larger the curvature of the fan-shaped convex lenses 33a at that location, so that the diffusion effect of light becomes smaller.

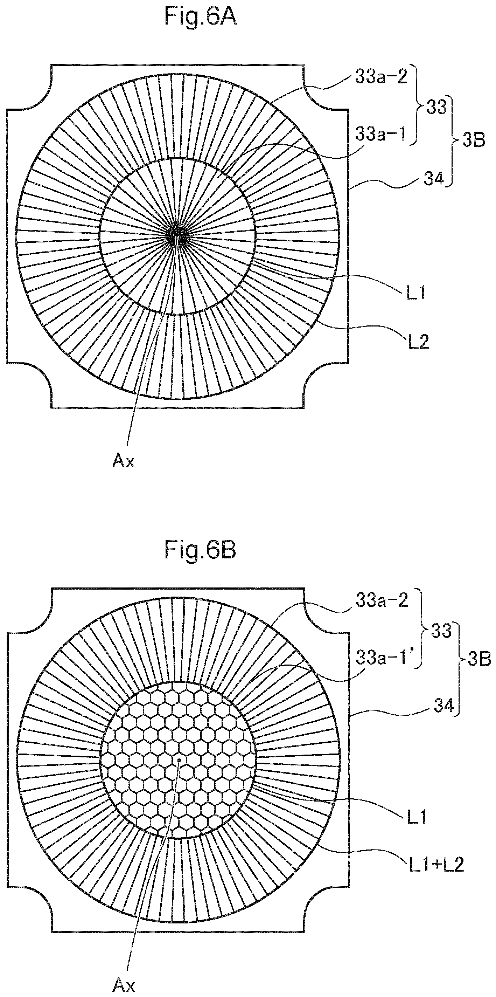

Fig. 6 is a lens array view on the emitting surface side of a modification of the diffusion lens of Fig. 3.

In (A) of Fig. 6, inner fan-shaped convex lenses 33a-1 and outer fan-shaped convex lenses 33a-2 are provided instead of the fan-shaped convex lenses 33a of the diffusion section 33 of Fig. 3. In this case, the number of the outer fan-shaped convex lens 33a-2 is larger than the number of the inner fan-shaped convex lens 33a-1. In other words, the width of the fan-shaped convex lens 33a-2 is smaller than the width of the fan-shaped convex lenses 33a of Fig. 3. Thus, the curvature of the fan-shaped convex lenses 33a-2 is smaller than the curvature of the fan-shaped convex lenses 33a of Fig. 3, so that the diffusion effect of light can be enhanced, which is helpful in removing the luminance nonuniformity and the color nonuniformity. Note that the two kinds of the inner fan-shaped convex lenses 33a-1 and 33a-2 are provided; however, three kinds of fan-shaped convex lenses can be provided. Even in this case, the number of outer fan-shaped convex lenses is larger than the number of inner fan-shaped convex lenses to enhance the diffusion effect of light.

In (B) of Fig. 6, hexagonal convex lenses 33a-1' are provided instead of the fan-shaped convex lenses 33a-1 of (A) of Fig. 6. Thus, the light diffusion effect in the central portion of the diffusion section 33 can be enhanced, and the effect of removing the nonuniformity of luminance and the nonuniformity of color can be further enhanced. Note that circular convex lenses or other polygonal convex lenses can be provided instead of the hexagonal convex lenses 33a-1'.

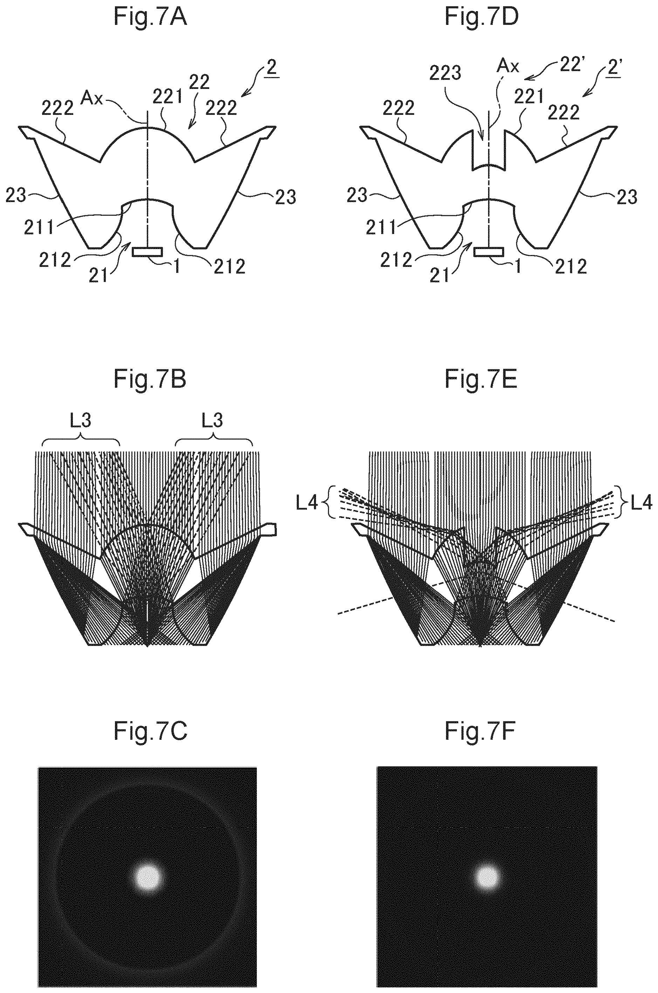

Fig. 7 is a view for explaining the collimated light of the collimator lenses of Figs. 1 and 3.

As illustrated in (A) of Fig. 7, the collimator lens 2 in Figs. 1 and 3 is the same as the collimator lens of Fig. 9. As a result, as illustrated in (B) of Fig. 7, light emitted from the optical source 1 is incident to the inner concave surface 211 of the incident surface 21, and is emitted through the inner convex surface 221 of the emitting surface 22, so that non-parallel leakage light L3 is generated almost above the emitting surface 22. Therefore, when the collimated light of the collimator lens 2 is projected, ring-shaped noise light may be generated around the projected light pattern as illustrated in (C) of Fig. 9.

Contrary to this and in accordance with the present invention, in a collimator lens 2' formed as illustrated in (D) of Fig. 7, a recess portion 223 is provided in the inner convex surface 221 of an emitting surface 22'. In this case, as illustrated in (E) of Fig. 7, incident light from the inner concave surface 211 becomes leakage light L4 which is leaked from the concave portion 223 via the inner convex surface 221 right beside the emitting surface 22 of the collimator lens 2'. As a result, therefore, when the collimated light of the collimator lens 2' is projected, no ring-shaped noise light is generated around the projected light pattern as illustrated in (F) of Fig. 9.

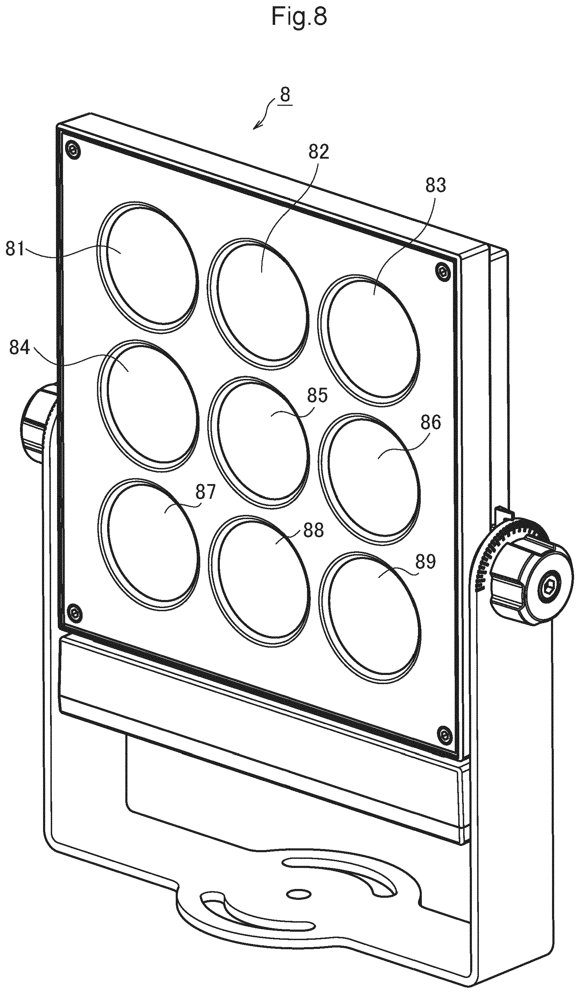

Fig. 8 is a perspective view illustrating a spotlight apparatus using illuminator apparatuses 81, 82, ..., 89.

As illustrated in Fig. 8, each of the illuminator apparatuses 81, 82, ..., 89 are adapted to emit light approximately along the same direction, so that spot light of the spotlight apparatus reaches about 1 km. In this case, each of the illuminator apparatuses 81, 82, ..., 89 is constructed by the illuminator apparatus of Fig. 1, 2, 3 or 6, where the collimator lenses 2 (2') can be the same as each other and the diffusion lenses can be different from each other.

### UTILIZATION IN INDUSTRY

The illuminator apparatus according to the present invention can be utilized in a projector, a searchlight apparatus, a scenery illuminator apparatus, a wall illuminator apparatus and the like, in addition to a spotlight apparatus.

## Claims

1. An illuminator apparatus comprising:
an optical source (1);
a collimator lens (2'), located on an optical axis (Ax) of said optical source (1), for receiving emitted light from said optical source (1) to emit collimated light (L1, L2); and
a diffusion lens (3A, 3A'), located on an emitting surface side of said collimator lens (2'), for receiving said collimated light (L1, L2) to diffuse said collimated light,
wherein said diffusion lens (3A, 3A') comprises:
a diffusion section (31, 31') for diffusing central light (L1) of said collimated light emitted from a central portion of an emitting surface (22') of said collimator lens (2'); and
a non-diffusion section (32) for transmitting peripheral light (L2) of said collimated light emitted from an outside of said central portion of the emitting surface (22') of said collimator lens (2'), without diffusing said peripheral light;
wherein said collimator lens (2') comprises:
an incident surface (21) having an inner concave surface (211) located at a central portion of said incident surface (21) and an outer convex surface (212) outside of said inner concave surface (211);
an emitting surface (22) having an inner convex surface (221) located at a central portion of said emitting surface (21) and an outer conical side surface (222) outside of said inner convex surface (221); and
a peripheral surface (23) coupling an end of said incident surface (21) to an end of said emitting surface (22');
wherein a recess portion (223) is provided at a center of said inner convex surface (221) of said emitting surface (22').

2. The illuminator apparatus as set forth in claim 1, wherein said diffusion section (31) comprises an array of multiple circular or polygonal convex lenses (31a).

3. The illuminator apparatus as set forth in claim 1, wherein said diffusion section (31') comprises an array of multiple fan-shaped convex lenses (31'a) centered at the optical axis (Ax) of said diffusion lens (3A') arranged along a radial direction of said optical axis (Ax).

4. The illuminator apparatus as set forth in claim 1, wherein said optical source (1) has a plane light emitting surface on the optical axis (Ax) of said collimator lens (2').

## Patentansprüche

1. Beleuchtungsvorrichtung, umfassend:
eine optische Quelle (1);
eine Kollimatorlinse (2'), die auf einer optischen Achse (Ax) der optischen Quelle (1) angeordnet ist, um von der optischen Quelle (1) emittiertes Licht zu empfangen und kollimiertes Licht (L1, L2) zu emittieren; und
eine Diffusionslinse (3A, 3A'), die auf einer Emissionsflächenseite der Kollimatorlinse (2') angeordnet ist, zum Empfangen des kollimierten Lichts (L1, L2), um das kollimierte Licht zu streuen,
wobei die Diffusionslinse (3A, 3A') umfasst:
einen Diffusionsabschnitt (31, 31') zum Streuen von zentralem Licht (L1) des kollimierten Lichts, das von einem zentralen Abschnitt einer Emissionsfläche (22') der Kollimatorlinse (2') emittiert wird; und
einen Nicht-Diffusionsabschnitt (32) zum Durchlassen von peripherem Licht (L2) des kollimierten Lichts, das von einer Außenseite des zentralen Abschnitts der Emissionsfläche (22') der Kollimatorlinse (2') emittiert wird, ohne das periphere Licht zu streuen;
wobei die Kollimatorlinse (2') umfasst:
eine Einfallsfläche (21) mit einer inneren konkaven Fläche (211), die sich in einem zentralen Abschnitt der Einfallsfläche (21) befindet, und einer äußeren konvexen Fläche (212) außerhalb der inneren konkaven Fläche (211);
eine Abstrahlfläche (22) mit einer inneren konvexen Fläche (221), die sich in einem zentralen Abschnitt der Abstrahlfläche (21) befindet, und einer äußeren konischen Seitenfläche (222) außerhalb der inneren konvexen Fläche (221); und
eine Umfangsfläche (23), die ein Ende der Einfallsfläche (21) mit einem Ende der Abstrahlfläche (22') verbindet;
wobei ein Aussparungsabschnitt (223) in der Mitte der inneren konvexen Fläche (221) der Abstrahlfläche (22') vorgesehen ist.

2. Beleuchtungsvorrichtung nach Anspruch 1, wobei der Diffusionsabschnitt (31) eine Anordnung aus mehreren kreisförmigen oder polygonalen konvexen Linsen (31a) umfasst.

3. Beleuchtungsvorrichtung nach Anspruch 1, wobei der Diffusionsabschnitt (31') eine Anordnung mehrerer fächerförmiger konvexer Linsen (31'a) umfasst, die auf die optische Achse (Ax) der Diffusionslinse (3A') zentriert und entlang einer radialen Richtung der optischen Achse (Ax) angeordnet sind.

4. Beleuchtungsvorrichtung nach Anspruch 1, wobei die Lichtquelle (1) eine ebene Licht emittierende Oberfläche auf der optischen Achse (Ax) der Kollimatorlinse (2') aufweist.

## Revendications

1. Dispositif d'éclairage comprenant :
une source optique (1) ;
une lentille collimatrice (2'), située sur un axe optique (Ax) de ladite source optique (1), destinée à recevoir la lumière émise par ladite source optique (1) afin d'émettre une lumière collimatée (L1, L2) ; et
une lentille de diffusion (3A, 3A'), située du côté de la surface d'émission de ladite lentille collimatrice (2'), destinée à recevoir ladite lumière collimatée (L1, L2) afin de diffuser ladite lumière collimatée,
ladite lentille de diffusion (3A, 3A') comprenant :
une section de diffusion (31, 31') destinée à diffuser la lumière centrale (L1) de ladite lumière collimatée émise depuis une partie centrale d'une surface d'émission (22') de ladite lentille collimatrice (2') ; et
une section de non-diffusion (32) destinée à transmettre la lumière périphérique (L2) de ladite lumière collimatée émise depuis l'extérieur de ladite partie centrale de la surface d'émission (22') de ladite lentille collimatrice (2'), sans diffuser ladite lumière périphérique ;
ladite lentille collimatrice (2') comprenant :
une surface d'incidence (21) comportant une surface concave interne (211) située au niveau d'une partie centrale de ladite surface d'incidence (21) et une surface convexe externe (212) à l'extérieur de ladite surface concave interne (211) ;
une surface d'émission (22) comportant une surface convexe interne (221) située au niveau d'une partie centrale de ladite surface d'émission (21) et une surface latérale conique externe (222) à l'extérieur de ladite surface convexe interne (221) ; et
une surface périphérique (23) reliant une extrémité de ladite surface d'incidence (21) à une extrémité de ladite surface d'émission (22') ;
dans lequel une partie en retrait (223) est prévue au centre de ladite surface convexe interne (221) de ladite surface d'émission (22').

2. Dispositif d'éclairage selon la revendication 1, dans lequel ladite section de diffusion (31) comprend un réseau de multiples lentilles convexes circulaires ou polygonales (31a).

3. Dispositif d'éclairage selon la revendication 1, dans lequel ladite section de diffusion (31') comprend un réseau de multiples lentilles convexes en forme d'éventail (31'a) centrées sur l'axe optique (Ax) de ladite lentille de diffusion (3A') et disposées le long d'une direction radiale dudit axe optique (Ax).

4. Dispositif d'éclairage selon la revendication 1, dans lequel ladite source optique (1) présente une surface d'émission de lumière plane sur l'axe optique (Ax) de ladite lentille collimatrice (2').
